# EUROPEAN PATENT APPLICATION

(11) **EP 1 366 880 A2**
(43) Date of publication of application: **03.12.2003**
(21) Application number: 03009708.3
(22) Date of filing: 30.04.2003
(51) Int. Cl.: B29C 43/22, H01M 8/02, B29C 59/04

(54) **Belt feed apparatus for continuous expanded graphite web**

(30) Priority: 02.05.2002 US 137537
(71) Applicant: BALLARD POWER SYSTEMS INC., Burnaby, B.C. V5J 5J9 (CA)
(72) Inventor: Gray, William, Richmond, B.C.,V6Y 3E2 (CA); Thumm, Horst, 70794 Filderstadt (DE); Brown Markus, 73728 Esslingen am Neckar (DE)
(74) Representative: Beyer, Andreas, Dr.

(57) **Abstract**

A belt feed apparatus (10) receives and feeds a continuous web of expanded graphite (2). The apparatus comprises a first pair of endless belts (14,14') for receiving the web of expanded graphite (2) therebetween, a drive motor operably connected to the first pair of belts (14,14') for driving the first pair of belts at a drive speed, a controller for varying the drive speed, and a first load means for varying a friction force (42) applied to the web by the first pair of belts (14,14').

## Description

### Field of the Invention

The present invention relates to web handling apparatus, in particular, to belt feed apparatus for feeding webs of expanded graphite to downstream processing components.

### Background of the Invention

Electrochemical cells, such as fuel cells, are typically employed in a stack wherein multiple cells are connected together in series and/or in parallel. Each cell in the stack is typically disposed between two plates to form a cell assembly. The plates act as current collectors and provide support for the adjacent electrodes. A plate can be shared between two adjacent cell assemblies, in which case the plate also serves as a separator to fluidly isolate adjacent cell assemblies.

In fuel cell assemblies, for instance, plates known as flow field plates have open-faced channels formed in one or both opposing major surfaces for directing reactants and/or coolant fluids to specific portions of such major surfaces. The open-faced channels also provide passages for the removal of reaction products, depleted reactant streams, and/or heated coolant streams. For an illustration of a fluid flow field plate, see, for example, U.S. Patent No. 4,988,583, issued January 29, 1991.

Flow field plates can be made from an electrically conductive, substantially fluid impermeable material that is sufficiently compressible or moldable so as to permit embossing. Expanded graphite sheet is generally suitable for this purpose because it is relatively impervious to typical fuel cell reactants and coolants and thus is capable of fluidly isolating the fuel, oxidant, and coolant fluid streams from each other; it is also compressible and embossing processes can be employed to form channels in one or both major surfaces. For example, U.S. Patent No. 5,527,363, issued June 18, 1996, describes flow field plates comprising a metal foil or sheet interposed between two expanded graphite sheets having flow channels embossed on a major surface thereof.

Flow field plates can be manufactured in volume by embossing a continuous web of expanded graphite. Suitable methods and apparatus for roller embossing a continuous web of expanded graphite to from such plates is described in U.S. Patent Application Serial No. 09/039,701, published November 15, 2001. Embossing flow field plates from a continuous web of expanded graphite, however, poses some web handling problems that do not normally arise with other web materials.

Unlike most web materials employed in continuous processes, expanded graphite has a very low tensile strength. However, some form of tension control is recommended. Uncontrolled tension can cause centering problems during embossing and/or result in web breaks due to high tensile loads developed.

At the same time, expanded graphite is also very soft, so the web can easily be crushed and/or the surface can be easily damaged. In addition, the embossing process can elongate the plate, with the die causing varying tension in the web due to the complex features of the flow field plate. Without adequate tension control, this can result in stretching or other damage to embossed features in the plate. Because of these material limitations, conventional tension control equipment, such as multiple-roller tensioners, braked feed spools and/or braked nip rollers cannot be employed without damaging the expanded graphite web.

It would be desirable to have a tensioning and feeding system for supplying a continuous expanded graphite web to an embosser that provided an adequate degree of tension control while avoiding damage to the web.

### Summary of the Invention

A belt feed apparatus is provided for receiving and feeding a continuous web of expanded graphite. In one embodiment the apparatus comprises a frame, at least one pair of belts connected to the frame for receiving the web of expanded graphite therebetween, a first drive motor operably connected to the first pair of belts for driving same at a drive speed, a controller for varying the drive speed, and a first moveable pressure plate operably connected to the'frame and adapted to contact a portion of the inner surface of the first belt for applying a variable friction force to the web.

In another embodiment, the present belt feed apparatus comprises at least one pair of endless belts for receiving the web of expanded graphite therebetween, a drive motor operably connected to the first pair of belts for driving the first pair of belts at a drive speed, a controller for varying the drive speed, and a first load means for varying a friction force applied to the web by the first pair of belts.

### Brief Description of the Drawings

In the drawings, identical reference numbers identify similar elements or acts. The sizes and relative positions of elements in the drawings are not necessarily drawn to scale. For example, the shapes of various elements and angles are not drawn to scale, and some of these elements are arbitrarily enlarged and positioned to improve drawing legibility. Further, the particular shapes of the elements as drawn, are not intended to convey particular information regarding the actual shape of the particular elements, and have been selected for ease of recognition in the drawings.
- FIG. 1: is a schematic illustration of an embossing line employing an embodiment of the present belt feed apparatus.
- FIG. 2: is a schematic elevation view of the belt feed apparatus of FIG. 1.
- FIG. 3: is a schematic top view of the belt feed apparatus of FIG. 1.

### Detailed Description of Preferred Embodiment(s)

In the following description, certain specific details are set forth in order to provide a thorough understanding of the various embodiments of the present apparatus. However, one skilled in the art will understand that the present apparatus can be practiced without these details. In other instances, well-known structures associated with roller embossing equipment, drive motors, control systems and the like have not been shown or described in detail to avoid unnecessarily obscuring descriptions of the embodiments of the present apparatus.

As used in this description and in the appended claims, "expanded graphite web" and "web of expanded graphite" means web materials comprising expanded graphite, including composites thereof such as, for example, the composite described in U.S. Patent No. 5,885,728, issued March 23, 1999. The terms also include laminates that include one or more layers comprising expanded graphite.

The present belt feed apparatus comprises a pair of endless belts directly opposed to each other for receiving an expanded graphite web between them. The pair of belts is driven by a motor at a drive speed synchronized to the line speed of a downstream processing component, such as a roller embosser, for example.

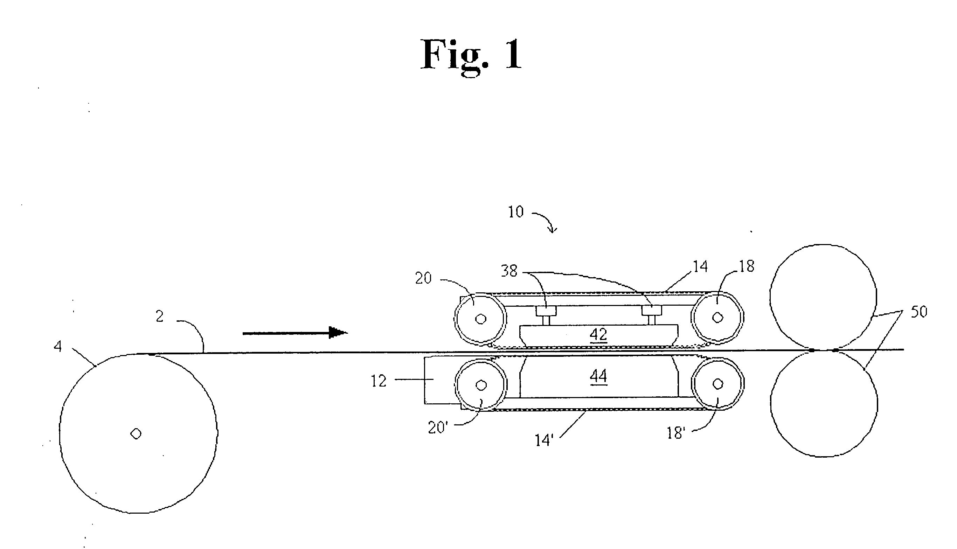

FIG. 1 is a schematic illustration of an embossing line employing an embodiment of the present belt feed apparatus. A web of expanded graphite 2 is fed from spool 4 to belt feed apparatus 10. Belt feed apparatus 10 then feeds web 2 to roller embossers 50.

The embossing line of FIG. 1 can also comprise other equipment, as desired. For example, pre-calendaring rolls, or apparatus for embossing under reduced pressure, such as those described in the published '701 application, mentioned above, can be employed. Also, slitting and cutting equipment can be employed downstream of the embossing rollers in the manufacture of flow field plates. As a further example, a station employing a laser beam partially obscured by the end of the manufactured plate could be employed to measure the length of the plates, by the quantity of light blocked by the plate end(s), as a dimensional quality check. Other suitable equipment will be apparent to persons skilled in the art.

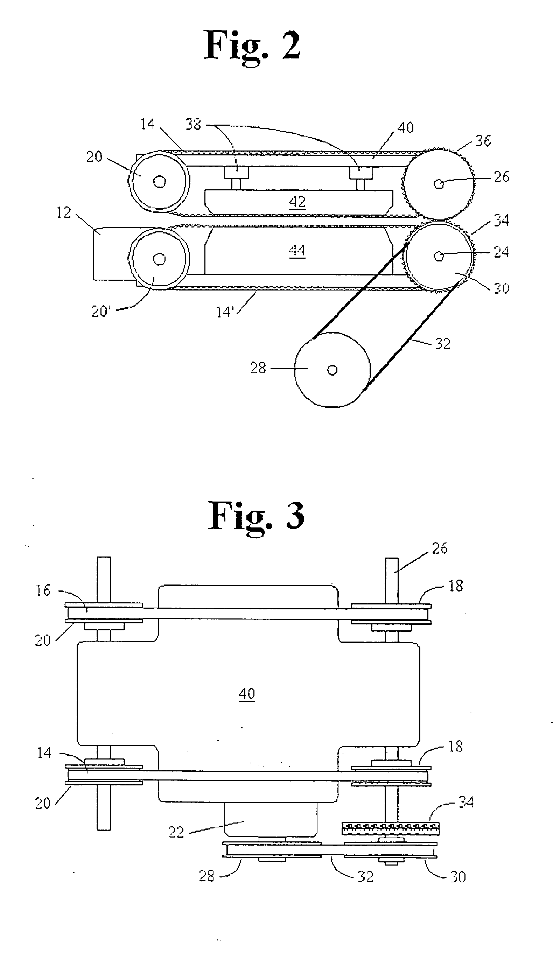

FIGs. 2 and 3 are further illustrations (elevation and top views, respectively) of belt feed apparatus 10. Guide 12 assists in feeding web 2 to pairs of belts 14, 14' and 16, 16'. The belts are driven around drive pulleys 18, 18' and idler pulleys 20, 20' by motor 22. Drive pulleys 18, 18' are connected by common axles 24, 26, respectively. Motor 22 is operatively connected to axle 24 via sprockets 28, 30 and chain 32. Motor 22 is also operatively connected to axle 26 via gears 34, 36. During operation, opposing portions of the belts apply friction to web 2 and feed it to embossing rollers 50. A controller (not shown) controls motor 22 in order to vary the drive speed of the belts and thus control the line speed of the web as it is fed to embossing rollers 50.

The pairs of belts in apparatus 10 can be the same length or of different lengths, and can be directly opposed to each other, or offset from each other, as desired.

Pistons 38 attached to frame 40 apply a load to pressure plate 42. Pressure plate 42 contacts an inner portion of belts 14, 16, applying a friction force on web 2. Plate 44 supports a portion of belts 14', 16' and helps to ensure good contact between the belts and web 2. The friction force applied to web 2 can be varied by increasing the load exerted by pressure plate 42.

Instead of a single pressure plate 42, individual pressure plates can be employed for each pair of belts, if desired. Similarly, individual support plates can be employed with each pair of belts instead of single plate 44. Pistons 38 can be mechanically, pneumatically or hydraulically activated, and can be commonly or independently controlled.

The gap between the pairs of belts can be adjusted to accommodate expanded graphite webs of different grades and/or thickness, if desired. For example, belts 14, 16 could be moveable within frame 40 to vary the gap between the pairs of belts. Of course, belts 14', 16' could alternatively or additionally be moveable within frame 40 for the same purpose.

In the embodiment of FIGs. 1-3, two pairs of belts are shown, with each pair of belts configured to contact an edge portion of the expanded graphite web. In applications where it is desired to avoid contact with the belts in a central portion of the web is to be embossed, this configuration can be employed. Generally though, the number of pairs of belts employed is not essential to the present apparatus. For example, in other applications the web could be notionally divided into a number of regions to be embossed, each flanked by portions of the web that are not: in such applications multiple pairs of belts could be employed to contact the web in the unembossed portions. Alternatively, in applications where contact between the belts and the surface of the web does not adversely affect the embossing process, one or more pairs of wider belts could be employed.

Similarly, the number of drive motors employed, and the means for operably connecting them to the belts, are not essential to the present apparatus.

The type and composition of the belts is likewise not essential to the present apparatus, and persons of ordinary skill in the art will be readily able to determine suitable belts for a given application. For example, timing belts or flat belts can be employed. The belts should provide sufficient friction to move the web; typically, belts with a substantially flat web-contacting surface can provide adequate friction. In this context, a substantially flat web-contacting surface includes flat, knurled, checked and otherwise patterned belt surfaces with sufficient flat surface area to provide adequate contact with the web. Appropriate surface materials include natural and synthetic rubbers, and polymers such as urethane, nylon, polyvinyl chloride (PVC) and silicone.

During operation, the drive speed of the present apparatus can be varied to match the feed rate of downstream embossing equipment. The degree to which the embossing process elongates the embossed portion of the web depends on such factors as the thickness and grade of expanded graphite web employed and the pattern to be embossed. This can also cause the effective line speed of the web to be different from the drive speed of the embossing rollers. If the drive speed of the belt feed apparatus and embossing rollers are synchronized, as is typically the case in conventional web handling systems, the difference between the effective line speed of the web and the drive speed of the embossing rollers can result in excessive tension in the web. To avoid damage to the web, therefore, the drive speed of the present belt feed apparatus is desirably controlled to substantially match the line speed of the web, not the drive speed of the embossing rollers.

Manual and/or automated controllers can be employed with the present apparatus. The particulars of the drive speed control system are not essential to the present apparatus; persons skilled in the art can select suitable conventional speed control systems for a given application. For example, a two-axis servo controller could receive input from a line encoder and a speed trim potentiometer and control the speed of the drive motor in response. Alternatively, the speed or gearing of the motor could be set manually.

While pistons are shown in FIGs. 1 and 2, the means for applying a load to the belts are not essential to the present apparatus, and persons of ordinary skill in the art can select suitable such means for a given application. For example, springs or expandable bladders (pneumatic or hydraulic) can be employed in place of the illustrated pistons. Alternatively, expandable bladders could also be employed to directly contact the inner surface of the belts, without the need for a pressure plate. Other suitable load means will be apparent to persons skilled in the art. If desired, such means could also be employed in place of plate 44 to apply a load to the inner surface of each of the pair(s) of opposed belts.

Although specific embodiments of and examples for the belt feed apparatus are described herein for illustrative purposes, various equivalent modifications can be made without departing from the scope of the invention in light of the above-detailed description, as will be recognized by those skilled in the relevant art. In general, in the following claims, the terms used should not be construed to limit the invention to the specific embodiments disclosed in the specification and claims, but should be construed to generally include belt feed systems for expanded graphite webs that operate in accordance with the claims.

While particular steps, elements, embodiments and applications of the present invention have been shown and described, it will be understood, of course, that the invention is not limited thereto since modifications can be made by persons skilled in the art, particularly in light of the foregoing teachings. It is therefore contemplated by the appended claims to cover such modifications as incorporate those steps or elements that come within the scope of the invention.

## Claims

1. A belt feed apparatus for receiving and feeding a continuous web of expanded graphite, the apparatus comprising:
a frame;
a first pair of belts comprising a first and second endless belt operably connected to the frame for receiving the web of expanded graphite therebetween, each of the belts having a substantially flat web contacting surface and an inner surface;
a first drive motor operably connected to the first pair of belts for driving same at a drive speed;
a controller for varying the drive speed; and
a first moveable pressure plate operably connected to the frame and adapted to contact a portion of the inner surface of the first belt for applying a variable friction force to the web.

2. The belt feed apparatus of claim 1 further comprising a support plate operably connected to the frame and adapted to contact an opposing portion of the inner surface of the second belt.

3. The belt feed apparatus of claim 1 further comprising a piston operably connected to the frame and the pressure plate for urging the pressure plate against the first belt.

4. The belt feed apparatus of claim 1 further comprising a pneumatic or hydraulic bladder operably connected to the frame and the pressure plate for urging the pressure plate against the first belt.

5. The belt feed apparatus of claim 1, further comprising a guide member operably connected to the frame for guiding the web to the first pair of belts.

6. The belt feed apparatus of claim 1 wherein at least one of the first and second belts is moveably connected to the frame for varying a gap between the first pair of belts.

7. The belt feed apparatus of claim 1 further comprising:
a second pair of belts comprising a third and fourth endless belt operably connected to the frame for receiving the web of expanded graphite therebetween, each of the belts having a substantially flat web contacting surface and an inner surface;
a second drive motor operably connected to the second pair of belts for driving same at a drive speed; and
a second moveable pressure plate operably connected to the frame and adapted to contact a portion of the inner surface of the third belt for applying a variable friction force to the web,
wherein the first and second pairs of belts are substantially parallel to each other and positioned to contact the web at opposing edge sections thereof.

8. The belt feed apparatus of claim 7 wherein the first and second drive motors are the same.

9. The belt feed apparatus of claim 8 further comprising:
a first drive pulley operably connected to one of the first pair of belts;
a second drive pulley operably connected to one of the second pair of belts,
wherein the first and second drive pulleys are connected by a common drive axle.

10. The belt feed apparatus of claim 7 wherein the first and second pressure plates are the same.

11. The belt feed apparatus of claim 7 further comprising a support plate operably connected to the frame and adapted to contact an opposing portion of the inner surface of each of the second and fourth belts, respectively.

12. A belt feed apparatus for receiving and feeding a continuous web of expanded graphite, the apparatus comprising:
a first pair of endless belts for receiving the web of expanded graphite therebetween, each of the belts having a substantially flat web-contacting surface;
a drive motor operably connected to the first pair of belts for driving the first pair of belts at a drive speed;
a controller for varying the drive speed; and
a first load means for varying a friction force applied to the web by the first pair of belts.

13. The belt feed apparatus of claim 12 wherein the first load means comprises a moveable pressure plate for contacting a portion of one of the first pair of belts and urging the one of the first pair of belts towards an opposing portion of the other belt.

14. The belt feed apparatus of claim 12 wherein the first load means comprises a pneumatic or hydraulic bladder for contacting a portion of one of the first pair of belts and urging the one of the first pair of belts towards an opposing portion of the other belt.

15. The belt feed apparatus of claim 12 wherein the first load means comprises a plurality of rollers for contacting a portion of one of the first pair of belts and urging same towards an opposing portion of the other belt.

16. The belt feed apparatus of claim 12 wherein at least one of the first pair of belts is moveable for varying a gap between the first pair of belts.

17. The belt feed apparatus of claim 12 further comprising:
a second pair of endless belts for receiving the web of expanded graphite therebetween, each of the belts having a substantially flat web contacting surface; and
a second load means for varying a friction force applied to the web by the second pair of belts,
wherein the drive motor is operably connected to the second pair of belts for driving the second pair of belts at the drive speed, and the first and second pairs of belts are substantially parallel to each other and positioned to contact the web at opposing edge sections thereof.
